(19) **Europäisches Patentamt**
**European Patent Office**
**Office européen des brevets**

(11) **EP 3 023 440 B1**

(12) **EUROPEAN PATENT SPECIFICATION**

(45) Date of publication and mention
of the grant of the patent:
**09.09.2020 Bulletin 2020/37**

(51) Int Cl.:
*C08F 2/00* (2006.01)     *C08F 4/48* (2006.01)
*C08F 36/04* (2006.01)     *C08F 236/10* (2006.01)
*B01J 19/26* (2006.01)     *C08F 2/01* (2006.01)
*B01J 19/18* (2006.01)

(21) Application number: **14826662.0**

(22) Date of filing: **14.07.2014**

(86) International application number:
**PCT/JP2014/068747**

(87) International publication number:
**WO 2015/008738 (22.01.2015 Gazette 2015/03)**

(54) **POLYMER MANUFACTURING METHOD**

POLYMERHERSTELLUNGSVERFAHREN

PROCÉDÉ DE FABRICATION DE POLYMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.07.2013 JP 2013148936
25.10.2013 JP 2013222605**

(43) Date of publication of application:
**25.05.2016 Bulletin 2016/21**

(73) Proprietor: **Asahi Kasei Kabushiki Kaisha
Tokyo 100-0006 (JP)**

(72) Inventor: **TOKIWA, Tetsuji
Tokyo 101-8101 (JP)**

(74) Representative: **Strehl Schübel-Hopf & Partner
Maximilianstrasse 54
80538 München (DE)**

(56) References cited:
**EP-A1- 0 648 790          GB-A- 1 255 764
JP-A- H0 314 803          JP-A- H0 314 803
JP-A- H04 227 610          JP-A- H04 279 614
JP-A- H06 199 921          JP-A- H07 233 228
JP-A- 2004 292 545          JP-A- 2005 513 172
JP-A- 2009 067 999          US-A- 3 297 793
US-A1- 2008 275 195**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a method for producing a polymer.

Background Art

In a method for polymerizing a conjugated diene monomer or an aromatic vinyl monomer in a solution with an organolithium compound as a polymerization initiator, the organolithium compound is usually diluted with a non-polar solvent and thereafter supplied to a polymerization tank in terms of mixing properties and suppression of gel generation in the polymerization tank. A procedure for dilution includes a method in which a storage tank equipped with a stirring blade is used to mix and stir an organolithium solution of a high concentration and a non-polar solvent. The method, however, may cause the difference in concentration every mixing batch, and therefore the problem of a reduction in stable productivity is pointed out.

In order to solve the above problem, a method has been proposed in which an organolithium solution of a high concentration and a non-polar solvent are combined and mixed in a pipe.

A method has also been proposed in which a mixture of a hydrocarbon solvent and 1,3-butadiene is brought into contact and mixed with an organolithium compound in the presence of a trace amount of an ether compound and a trace amount of 1,2-butadiene in advance and thereafter subjected to continuous polymerization at a high temperature (see, for example, Patent Document 1).

Furthermore, a reactor for continuous preparation of a synthetic rubber has been proposed which is provided with a rotatable, tubular reactor housing (see, for example, Patent Document 2).

List of Prior Art Documents

Patent Documents

Patent Document 1: Japanese Patent Laid-Open No. 59-176311
Patent Document 2: National Publication of International
Patent Application No. 2012-531515

EP 0 648 790 A1 discloses a continuous anionic polymerization process of a styrene-butadiene rubber comprising a step of mixing an organolithium compound with a non-polar organic solvent.

GB 1255764, JP 2009-067999 A, JPH03-14803 A, US 2008/275195 A1 and US 3,297,793 disclose the use of pipe-systems for the purpose of mixing in polymerization reactions. Among these, GB 1255764, JPH03-14803 A and US 2008/275195 A1 disclose the use of Venturi tubes.

Summary of Invention

Problems to be Solved by Invention

Uniformity of mixing, however, is insufficient even by the prior art, and a problem is that a portion of a high concentration, partially generated, causes gel generation in a polymerization tank.

An object of the present invention is to prepare a uniform organolithium compound solution having no concentration distribution to thereby suppress gel generation in a polymerization tank and prevent incorporation of gel into a product in a method for producing a polymer by polymerization of a monomer containing a conjugated diene compound and/or an aromatic vinyl compound by use of an organolithium compound as a polymerization initiator.

Means for Solving Problems

The present inventors have made intensive studies in order to solve the problems of the conventional art, and as a result, have found that, when a step of mixing (diluting) an organolithium compound as a polymerization initiator with a non-polar solvent in a pipe is comprised and the organolithium compound and/or the non-polar solvent is in the state of turbulent flow in the step, gel generation in a polymerization tank is significantly suppressed and gel incorporation into a product is also sufficiently suppressed, leading to the present invention.

The present invention is as follows.

[1] A method for producing a polymer by polymerization of a monomer comprising a conjugated diene compound and/or an aromatic vinyl compound by use of an organolithium compound as a polymerization initiator, comprising
step (1) of mixing an organolithium compound solution I in which the concentration of the organolithium compound is 5 to 50 % by mass and a non-polar solvent in a pipe-system to provide an organolithium compound solution II, and
step (2) of feeding the organolithium compound solution II to the bottom of a polymerization tank,
wherein at least one selected from the group consisting of the organolithium compound solution I, the organolithium compound solution II and the non-polar solvent is in the state of turbulent flow in step (1), said turbulent flow being characterized by a Reynolds number (Re) of 500000 or more.
[2] The method for producing the polymer according to [1], wherein
the pipe-system has a pipe (i) through which the organolithium compound solution I passes, a pipe (ii) through which the non-polar solvent passes, and a pipe (iii) through which the organolithium compound solution II passes,

the pipe (i) and the pipe (ii) are coupled in a coupling point (Z) to thereby combine the organolithium compound solution I and the non-polar solvent, and one or more pipes selected from the group consisting of the pipes (i), (ii) and (iii) have at least one point, at which a cross-sectional area is 50% to 99% relative to a maximum cross-sectional area of the pipe within 100 cm from the coupling point (Z) of the pipe (i) and the pipe (ii) .

[3] The method for producing the polymer according to [2], wherein the pipe (ii) has at least one point, at which a cross-sectional area is 50% to 99% relative to a maximum cross-sectional area of the pipe within 100 cm from the coupling point (Z).

[4] The method for producing the polymer according to any one of [1] to [3], wherein step (1) is performed in a Venturi tube.

[5] The method for producing the polymer according to any one of [1] to [3], wherein step (1) is performed by a static mixer or by stirring in the pipe by a stirring blade.

[6] The method for producing the polymer according to any one of [1] to [5], wherein the polymerization tank is a continuous type tank.

Advantages of Invention

The method of the present invention allows gel generation in a polymerization tank to be significantly suppressed, and also allows gel incorporation to a product to be sufficiently suppressed.

Brief Description of Drawings

[Figure 1] Figure 1 is one example of a schematic view of a Venturi tube for use in the present invention.
[Figure 2] Figure 2 is a schematic view of a pipe with no throttle part, used in Comparative Example 1.
[Figure 3] Figure 3 is one example of a schematic view of a pipe for use in the present invention.

Mode for Carrying Out Invention

Hereinafter, an embodiment for carrying out the present invention (hereinafter, referred to as the "present embodiment".) is described in detail.

It is to be noted that the present invention is not limited to the following embodiments and can be performed with being variously modified within the gist thereof.

<<Method for producing polymer>>

A method for producing a polymer of the present embodiment is a method for producing a polymer by polymerization of a monomer containing a conjugated diene compound and/or an aromatic vinyl compound by use of an organolithium compound as a polymerization initiator, comprising

step (1) of mixing an organolithium compound solution I in which the concentration of the organolithium compound is 5 to 50 % by mass and a non-polar solvent in a pipe-system to provide an organolithium compound solution II, and
step (2) of feeding the organolithium compound solution II to the bottom of a polymerization tank, wherein at least one selected from the group consisting of the organolithium compound solution I, the organolithium compound solution II and the non-polar solvent is in the state of turbulent flow in step (1), said turbulent flow being characterized by a Reynolds number (Re) of 500000 or more.

<Polymer>

The polymer produced in the present embodiment includes a polymer containing a conjugated diene compound, a polymer containing an aromatic vinyl compound, a copolymer of a conjugated diene compound and an aromatic vinyl compound, a polymer of a conjugated diene compound and a monomer copolymerizable with the conjugated diene compound, and a polymer of an aromatic vinyl compound and a monomer copolymerizable with the aromatic vinyl compound. The copolymer of a conjugated diene compound and an aromatic vinyl compound may contain other monomer copolymerizable with the conjugated diene compound or the aromatic vinyl compound.

In the production method of the present embodiment, for example, a monomer containing a conjugated diene compound and/or an aromatic vinyl compound can be fed to a polymerization tank and polymerized by a polymerization initiator to thereby provide a polymer.

<Conjugated diene compound>

The conjugated diene compound for use in the method for producing the polymer of the present embodiment is not particularly limited as long as it is a polymerizable monomer, and examples include 1,3-butadiene, isoprene, 2,3-dimethyl-1,3-butadiene, 1,3-pentadiene, 3-methyl-1,3-pentadiene, 1,3-heptadiene and 1,3-hexadiene. Among them, 1,3-butadiene or isoprene is preferable from the viewpoint of industrial availability. These may be used singly or in combinations of two or more. When allenes, acetylenes, and the like are contained as impurities in the conjugated diene compound, a modification reaction at the terminal of a polymer chain may be inhibited. Therefore, the total content concentration (mass) of such impurities in the conjugated diene compound is preferably 200 ppm or less, more preferably 100 ppm or less, further preferably 50 ppm or less.

Allenes and acetylenes that are impurities in the conjugated diene compound are preferably treated with an organometallic compound before the polymerization reaction because a polymer having an active terminal in a high concentration tends to be obtained and a high modification rate tends to be achieved when a modification reaction is performed after the polymerization.

Examples of allenes include, but not particularly limited, propadiene and 1,2-butadiene. Examples of acetylenes include, but not particularly limited, ethyl acetylene and vinyl acetylene.

<Aromatic vinyl compound>

Examples of the aromatic vinyl compound for use in the method for producing the polymer of the present embodiment include, but not particularly limited, styrene, m- or p-methylstyrene, α-methylstyrene, vinylethylbenzene, vinylxylene, vinylnaphthalene, diphenylethylene and divinylbenzene. Among them, styrene is preferable from the viewpoint of industrial availability. These may be used singly or in combinations of two or more.

<Other monomer copolymerizable with conjugated diene compound or aromatic vinyl compound>

Examples of other monomer copolymerizable with a conjugated diene compound or an aromatic vinyl compound include, but not particularly limited, methacrylate, acrylate, acrylonitrile, acrylamide, cyclohexene, cyclohexadiene and cyclopentene. These may be used singly or in combinations of two or more.

<Polymer structure>

When the polymer is a copolymer of a conjugated diene compound and an aromatic vinyl compound, such a copolymer may be a random copolymer or a block copolymer.

Examples of the random copolymer include, but not particularly limited, a butadiene-isoprene random copolymer, a butadiene-styrene random copolymer, an isoprene-styrene random copolymer and a butadiene-isoprene-styrene random copolymer. Examples of the composition distribution of each monomer in the copolymer chain include, but not particularly limited, a complete random copolymer whose composition is close to statistically random composition, and a taper (gradient) random copolymer having a gradient in its composition distribution. The bonding modes of conjugated dienes, namely, the compositions of a 1,4-bond, a 1,2-bond, and the like may be uniform or different depending on the molecular chain.

Examples of the block copolymer include, but not particularly limited, a 2 type block copolymer having two blocks, a 3 type block copolymer having three blocks, and a 4 type block copolymer having four blocks. When the block of an aromatic vinyl compound such as styrene is designated as S, and the block of a conjugated diene compound such as butadiene or isoprene and/or the block of a copolymer of an aromatic vinyl compound and a conjugated diene compound is designated as B, examples of the block copolymer include, but not particularly limited, an S-B 2 type block copolymer, an S-B-S 3 type block copolymer and an S-B-S-B 4 type block copolymer.

In the above formulae, the boundary between respective blocks is not necessarily required to be clearly distinguished. For example, when the block B is a copolymer of an aromatic vinyl compound and a conjugated diene compound, the aromatic vinyl compound in the block B may be uniformly distributed, or may be distributed in a tapered manner. In addition, a plurality of moieties in which the aromatic vinyl compound is uniformly distributed and/or a plurality of moieties in which the aromatic vinyl compound is distributed in a tapered manner may coexist in the block B. Furthermore, a plurality of segments having a different aromatic vinyl compound content may coexist in the block B. When a plurality of the blocks S and a plurality of the blocks B are present in the copolymer, the molecular weights, the compositions, and the like thereof may be the same or different.

<Non-polar solvent>

The polymerization reaction of the conjugated diene compound, the polymerization reaction of the conjugated diene compound and the aromatic vinyl compound, or the polymerization reaction of the aromatic vinyl compound is preferably performed in a non-polar solvent. Examples of the non-polar solvent include, but not particularly limited, hydrocarbon type solvents such as a saturated hydrocarbon and an aromatic hydrocarbon. Examples of the hydrocarbon type solvent include, but not particularly limited, C4 to C8 aliphatic hydrocarbons, and toluene and xylene, and the hydrocarbon type solvent may be a cyclic hydrocarbon or may have an unsaturated bond and/or a branched structure. Specifically, examples include aliphatic hydrocarbons such as butane, pentane, hexane and heptane; alicyclic hydrocarbons such as cyclopentane, cyclohexane, methyl cyclopentane and methyl cyclohexane; aromatic hydrocarbons such as benzene, toluene and xylene, and hydrocarbon type solvents including mixtures thereof.

The non-polar solvent is preferably any of C5 and C6 aliphatic hydrocarbons because such hydrocarbons have a boiling point and a vapor pressure so as to be easily handled in a production process, and specifically, pentane, normal hexane (n-hexane) or cyclohexane is preferably used.

<Organolithium compound>

In the method for producing the polymer of the present embodiment, examples of the organolithium compound for use as the polymerization initiator include, but not particularly limited, an organolithium compound of a low-molecular compound or an oligomer solubilized. Examples of the organolithium compound represented by the bonding mode of an organic group and lithium include, but not particularly limited, an organolithium compound having a carbon-lithium bond, an organolithium compound having a nitrogen-lithium bond, and an organolithium compound having a tin-lithium bond.

Examples of the organolithium compound having the carbon-lithium bond include, but not particularly limited, n-butyllithium, sec-butyllithium, tert-butyllithium, n-hexyllithium, benzyllithium, phenyllithium and stilbenelithium.

Examples of the organolithium compound having the nitrogen-lithium bond include, but not particularly limited, lithium dimethylamide, lithium diethylamide, lithium dipropylamide, lithium di-n-hexylamide, lithium diisopropylamide, lithium hexamethyleneimide, lithium pyrrolidide, lithium piperidide, lithium heptamethyleneimide and lithium morpholide.

As the organolithium compound, not only the above monoorganolithium compound, but also a polyfunctional organolithium compound can be used, or the monoorganolithium compound and a polyfunctional organolithium compound can be used in combination.

Examples of the polyfunctional organolithium compound include, but not particularly limited, 1,4-dilithiobutane, a reaction product of sec-butyllithium with diisopropenylbenzene, 1,3,5-trilithiobenzene, a reaction product of n-butyllithium with 1,3-butadiene and divinylbenzene, and a reaction product of n-butyllithium with a polyacetylene compound. Furthermore, the organolithium compounds disclosed in U.S. Patent No. 5,708,092, GB Patent No. 2,241,239, U.S. Patent No. 5,527,753, and the like can also be used. As the organolithium compound, n-butyllithium or sec-butyllithium is preferable from the viewpoint of industrial availability and ease of control of a polymerization reaction.

The organolithium compound may be used singly or as a mixture of two or more.

<Organolithium compound solution I>

The organolithium compound is preferably stored in a storage tank as an organolithium compound solution I formed by dilution with a non-polar solvent, from the viewpoint of handleability. Examples of the non-polar solvent used here include, but not particularly limited, non-polar solvents which are the same as the non-polar solvents for use in the polymerization reaction described above.

The concentration of the organolithium compound in the organolithium compound solution I is 5 to 50% by mass, preferably 10 to 40% by mass, further preferably 15 to 25% by mass from the viewpoint of suppression of deactivation.

<Organolithium compound solution II>

When the organolithium compound is used as the polymerization initiator for polymerization, an organolithium compound solution II is preferably formed by further diluting and mixing the organolithium compound solution I with a non-polar solvent in order to improve handleability and dispersibility in the polymerization solution. Examples of the non-polar solvent used here include, but not particularly limited, non-polar solvents which are the same as the non-polar solvents for use in the polymerization reaction described above.

The organolithium compound solution II preferably has a concentration of the organolithium compound in the range from 0.002 to 0.2% by mass, more preferably 0.005 to 0.1% by mass, further preferably 0.01 to 0.05% by mass from the viewpoint of polymerization initiation efficiency, and uniform mixing properties with the monomer.

<Polar compound>

A polar compound may be contained in the organolithium compound solution I and the organolithium compound solution II. In this case, the polar compound may be added to the non-polar solvent with which the organolithium compound solution I is mixed. The polar compound can be used in order to randomly copolymerize the aromatic vinyl compound with the conjugated diene compound, and can also be used as a vinylating agent for controlling the microstructure of a conjugated diene moiety. In addition, the polar compound is also effective for an improvement in polymerization rate, and the like.

Examples of the polar compound include, but not particularly limited, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene and 2,2-bis(2-oxolanyl)propane; tertiary amine compounds such as tetramethylethylene diamine, dipiperidinoethane, trimethylamine, triethylamine, pyridine and quinuclidine; alkali metal alkoxide compounds such as potassium-t-amilate, potassium-t-butyrate, sodium-t-butyrate and sodium amilate; and phosphine compounds such as triphenylphosphine. These polar compounds may be used singly or in combinations of two or more.

The amount of the polar compound to be used is not particularly limited, and can be selected depending on the object and the like. Usually, the amount is preferably 0.01 to 100 mol per mol of the polymerization initiator. The polar compound (vinylating agent) can be used as a modulator of the microstructure of a conjugated diene moiety in the polymer in a proper amount depending on the desired amount of a vinyl bond.

Most polar compounds also have an effective effect of randomly copolymerizing the conjugated diene compound and the aromatic vinyl compound, and can be used for adjustment of the aromatic vinyl distribution or as an adjuster of the amount of a styrene block. The method for randomly copolymerizing the conjugated diene compound and the aromatic vinyl compound is not particularly limited, and for example, the method described in Japanese Patent Laid-Open No. 59-140211 can also be used which comprises intermittently adding a part of 1,3-butadiene during copolymerization.

<Step (1)>

The method for producing the polymer of the present embodiment comprises step (1) of mixing an organolithium compound solution I in which the concentration of the organolithium compound is 5 to 50 % by mass and a non-polar solvent in a pipe-system to provide an organolithium compound solution II, and at least one selected from the group consisting of the organolithium compound solution I, the organolithium compound solution II and the non-polar solvent is in the state of turbulent flow characterized by a Reynolds number (Re) of 500000 or more in step (1).

Step (1) is specifically described. For example, the organolithium compound solution I may be in the state of turbulent flow and then mixed with the non-polar solvent to provide the organolithium compound solution II, the non-polar solvent may be in the state of turbulent flow and then mixed with the organolithium compound solution I to provide the organolithium compound solution II, both the organolithium compound solution I and the non-polar solvent may be simultaneously or separately in the state of turbulent flow and the organolithium compound solution I and the non-polar solvent may be then mixed to provide the organolithium compound solution II, or the organolithium compound solution I and the non-polar solvent in the state of laminar flow may be mixed and the resulting organolithium compound solution II may be then in the state of turbulent flow.

In the present embodiment, the state of turbulent flow refers to a turbulent state where the flow of a medium in a pipe is not in parallel with the inner wall of the pipe, and is distinguished from the state of laminar flow, where the flow of a medium in a pipe is in parallel with the inner wall of the pipe and has a regular flow line.

The flow state in the pipe can also be represented by the Reynolds number, and a larger Reynolds number exhibits turbulent flow and a smaller number exhibits laminar flow. While the Reynolds number at the boundary between turbulent flow and laminar flow is not clear, it is 500,000 or more in the present invention because a good mixing property of the organolithium compound solution I and the non-polar solvent is achieved, and a Reynolds number of 700,000 is more preferable and a Reynolds number of 1,000,000 or more is particularly preferable because a good mixing property is achieved even in a small amount of the organolithium compound solution I.

The Reynolds number (Re) is defined by the following expression.

$$Re = (d)(u)(\rho)/(\mu)$$

d: pipe diameter [m], u: average flow rate [m/sec], ρ: density [kg/m³], and μ: viscosity [kg/(m·sec)]

At least one selected from the group consisting of the organolithium compound solution I, the organolithium compound solution II and the non-polar solvent can be in the state of turbulent flow to thereby provide an organolithium compound solution II in which the organolithium compound solution I and the non-polar solvent are uniformly mixed.

A procedure for forming the state of turbulent flow is not particularly limited, and step (1) being performed in a pipe-system, examples of the procedure include a method of providing a mixer in the pipe, a method of providing a protruding object or a disposing object, such as a plate that holds flow, in the pipe, a method of combining fluids flowing in different directions at the intersection between branched pipes, and a method of using a Venturi tube as the pipe. Examples of the method of providing a mixer in the pipe include, but not particularly limited, a method of providing a static type mixer with no driving portion, like a static mixer, and a method of providing a stirring blade to thereby stir a solution in the pipe. The Venturi tube means a tube using the Venturi effect, and specifically means a tube having a mechanism where a pipe has a portion having a locally narrow cross-sectional area to thereby increase the flow rate of a fluid in such a narrow portion, resulting in the state of turbulent flow in the fluid. In particular, step (1) is preferably performed in the Venturi tube from the viewpoint of ease of the occurrence of turbulent flow. Step (1) may be performed by a static mixer or by stirring in the pipe by a stirring blade.

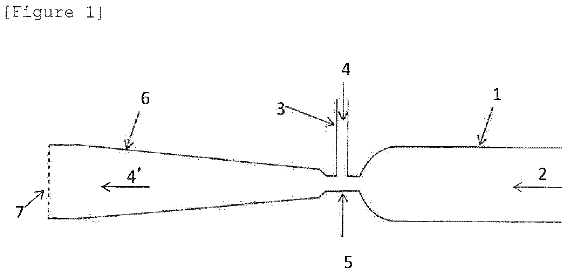

The Venturi tube for use in the present embodiment is exemplified in Figure 1. Hereinafter, one example of the method for forming turbulent flow by use of the Venturi tube is specifically described with reference to Figure 1. An organolithium compound solution I (4) of a high concentration before dilution flows in a pipe (3), and a non-polar solvent (2) for dilution flows in a pipe (1). The non-polar solvent (2) is in the state of laminar flow in flowing in the pipe (1), and is changed to be in the state of turbulent flow in passing through a portion (5) having a narrow cross-sectional area. The organolithium compound solution I (4) is combined with the non-polar solvent (2) at the position of the portion (5). The organolithium compound solution I (4) and the non-polar solvent (2) are uniformly mixed to provide an organolithium compound solution II (4'), and the organolithium compound solution II (4') passes through a pipe (6) and is fed through a feed port (7) of a polymerization tank to the polymerization tank.

A point at which the organolithium compound solution I and the non-polar solvent are combined is located in a pipe coupled to the polymerization tank, and may be, for example, a place where the state of turbulent flow occurs in step (1) or a place before the state of turbulent flow occurs.

Step (1) being performed in a pipe-system, the pipe-system preferably has a pipe (i) through which the organolithium compound solution I passes, a pipe (ii) through which the non-polar solvent passes, and a pipe (iii) through which the organolithium compound solution II passes. The pipe (i) through which the organolithium compound solution I passes and the pipe (ii) through which the non-polar solvent passes are preferably coupled to thereby combine the organolithium compound solution I and the non-polar solvent. Furthermore, one or more pipes selected from the group consisting of the pipes (i), (ii) and (iii) preferably have at least one point, at which the cross-sectional area is 50% to 99% relative to the maximum cross-sectional area of the pipe within 100 cm from a coupling point (Z) of the pipe (i) and the pipe (ii). A pipe having such a point is used to thereby easily form turbulent flow.

Moreover, from the viewpoint of ease of formation of turbulent flow, the pipe (ii) through which the non-polar solvent passes preferably has a point, at which the cross-sectional area is 50% to 99% relative to the maximum cross-sectional area of the pipe within 100 cm from the coupling point (Z) of the pipe (i) and the pipe (ii) .

The point at which the cross-sectional area is 50% to 99% relative to the maximum cross-sectional area of the pipe is more preferably within 100 cm from the coupling point (Z), more preferably within 50 cm, further preferably within 20 cm from the coupling point (Z). The rate of reduction of the cross-sectional area of the pipe within 100 cm from the coupling point (Z) is more preferably from 50% to 99%, further preferably from 60% to 97%, particularly preferably from 70% to 95%.

When one or more pipes selected from the group consisting of the pipes (i), (ii) and (iii) have at least one point, at which the cross-sectional area is 50% to 99% relative to the maximum cross-sectional area of the pipe within 100 cm from the coupling point (Z) of the pipe (i) and the pipe (ii), the cross-sectional area at the point (throttle part) where the area is minimum in the pipe is preferably 15% or less, preferably 10% or less, more preferably 5% or less relative to the maximum cross-sectional area. The lower limit is preferably 1% or more. The pipe (ii) through which the non-polar solvent passes preferably has the point (throttle part), where the cross-sectional area is minimum, within 100 cm from the coupling point (Z) of the pipe (i) and the pipe (ii), and the cross-sectional area at the coupling point (Z) is more preferably minimum.

The diameters of the pipe (ii) and the pipe (iii) are each preferably 6.5 to 81 mm, more preferably 9.2 to 22 mm, further preferably 12.7 to 41.6 mm.

The diameter of the pipe (i) is preferably 1/5 to 4/5 times, more preferably 1/4 to 3/4 times, further preferably 1/3 to 2/3 times the diameter(s) of the pipe (ii) and/or the pipe (iii).

The diameter of the pipe at the point (throttle part) where the cross-sectional area is minimum is preferably 1 to 50 mm, more preferably 1 to 20 mm, further preferably 1 to 10 mm.

The maximum cross-sectional area of the pipe having a point where the cross-sectional area is 50% to 99% relative to the maximum cross-sectional area is preferably 0.33 to 51.1 $cm^2$, more preferably 0.66 to 22 $cm^2$, further preferably 1.27 to 13.6 $cm^2$.

The relationship between the diameter (D mm) of the pipe and the distance (X cm) from the coupling point (Z) to the point, where the cross-sectional area is 50% to 99% relative to the maximum cross-sectional area of the pipe, is preferably X/D < 36, more preferably X/D < 18, further preferably X/D < 6.

Particularly preferably, step (1) is performed in the Venturi tube and the coupling point (Z) corresponds to the point where the cross-sectional area is locally narrow in the Venturi tube described above.

In the present embodiment, step (1) is performed before step (2) described later, to thereby continuously mix the organolithium compound solution I and the non-polar solvent.

The organolithium compound subjected to dilution in step (1) is fed to a polymerization tank, and is reacted as the polymerization initiator with the above monomer in the polymerization tank.

<Step (2)>

The method for producing the polymer of the present embodiment comprises step (2) of feeding the organolithium compound solution II obtained in step (1) to the bottom of a polymerization tank.

As described above, the organolithium compound solution I is mixed with the non-polar solvent before being fed to the polymerization tank, to provide the organolithium compound solution II more dilute than the organolithium compound solution I. A preferable concentration of the organolithium compound in each of the organolithium compound solution I and the organolithium compound solution II is as described above.

<Polymerization tank>

The polymerization tank may be any of continuous type, batch type and semi-batch type polymerization tanks, and is preferably a continuous type polymerization tank because the effect of the present invention is remarkably exerted. In the continuous type polymerization tank, the organolithium compound is usually continuously fed to the polymerization tank and thus gel generation easily occurs around the feed port, but the method for producing the polymer of the present embodiment has the special steps described above and thus can suppress gel generation around the feed port even in use of the continuous type polymerization tank.

As the continuous type polymerization tank, one, or two or more polymerization tanks coupled can be used. Two or more polymerization tanks coupled are preferable from the viewpoint of controlling the molecular weight distribution, for example, enabling the molecular weight distribution of the polymer to be narrow. The type of the polymerization tank is not particularly limited, and for example, a bath type or tube type polymerization tank equipped with a stirrer can be used.

In the continuous type polymerization tank, the organolithium compound solution II is fed to the bottom of the polymerization tank from the viewpoint of the yield of the polymerization reaction. The bottom here means a portion located lower than half the height of the polymerization tank in the longitudinal direction, more preferably a portion located at or lower than a fifth of the height of the polymerization tank in the longitudinal direction. In continuous type polymerization, the inside of the polymerization tank is preferably completely filled with the polymerization solution because adhesion of the polymerized product onto the inner wall surface of a gas phase portion is suppressed.

<Polymerization conditions>

The polymerization temperature is not particularly limited as long as it is a temperature at which polymerization of the monomer containing the conjugated diene compound and/or the aromatic vinyl compound progresses, and is preferably 0°C or higher from the viewpoint of productivity and is preferably 120°C or lower from the viewpoint of suppression of deactivation during polymerization. From the viewpoint of preventing cold flow of the polymer, a polyfunctional aromatic vinyl compound for control of branching, such as divinylbenzene, may be used.

<Other steps>

The method for producing the polymer of the present embodiment may have, after completion of polymerization, a step of adding a deactivator, a neutralizer or the like depending on the reaction solution, if necessary. Examples of the deactivator include, but not particularly limited, water; and alcohols such as methanol, ethanol and isopropanol. Examples of the neutralizer include, but not particularly limited, carboxylic acids such as stearic acid, oleic acid and versatic acid, an aqueous solution of an inorganic acid, and carbon dioxide.

Furthermore, the method for producing the polymer of the present embodiment preferably comprises a step of adding a stabilizer for rubber to the resulting polymer from the viewpoints of prevention of gel generation after polymerization and improvement in stability during processing. The stabilizer for rubber is not particularly limited, a known one can be used, and for example, an antioxidant such as 2,6-di-tert-butyl-4-hydroxytoluene (BHT), n-octadecyl-3-(4'-hydroxy-3',5'-di-tert-butylphenol)propionate or 2-methyl-4,6-bis[(octylthio)methyl]phenol is preferable.

The method for obtaining the polymer from the polymer solution is not particularly limited, and a known method can be used. Examples include a method in which the solvent is separated by steam stripping or the like, and thereafter the polymer is separated by filtration and furthermore dehydrated and dried to provide the polymer, and a method in which concentrating is conducted in a flushing tank and devolatilizing is conducted by a vent extruder or the like, and a method in which direct devolatilizing is conducted by a drum dryer or the like.

<Apparatus for producing polymer>

An apparatus used for producing a polymer has a polymerization tank, a pipe a for feeding a monomer containing a conjugated diene compound and/or an aromatic vinyl compound to the polymerization tank, a pipe b for feeding an organolithium compound solution II, in which an organolithium compound solution I and a nonpolar solvent are mixed, to the polymerization tank, a pipe c for feeding the non-polar solvent to the pipe b, and a pipe d for feeding the organolithium compound solution I to the pipe b, wherein one or more pipes selected from the group consisting of the pipes b, c and d have a structure that forms turbulent flow.

One or more pipes selected from the group consisting of the pipes b, c and d preferably have a structure that forms turbulent flow within 100 cm from a coupling point of the pipe c and the pipe d.

Distinction among the pipe b, the pipe c and the pipe d is determined depending on the types of liquids flowing therein. That is, when the liquid flowing in a pipe is the organolithium compound solution II, the pipe is referred to as the pipe b; when the liquid flowing in a pipe is the non-polar solvent, the pipe is referred to as the pipe c; and when the liquid flowing in a pipe is the organolithium compound solution I, the pipe is referred to as the pipe d.

The turbulent flow is as described above. Examples of the pipe having a structure that forms turbulent flow include, but not particularly limited, a pipe provided with a static mixer, a pipe in which the area and the shape of the cross-section are varied, and a pipe provided with a protruding object or a disposing object that holds flow.

As one or more pipes selected from the group consisting of the pipes b, c and d, a Venturi tube is preferably used from the viewpoint of stress strain on the pipe, retention property of a fluid, and precipitation properties of the organolithium compound.

In the apparatus for producing the polymer, one or more pipes selected from the group consisting of the pipes b, c and d preferably have at least one point, at which the cross-sectional area is 50% to 99% relative to the maximum cross-sectional area of the pipe within 100 cm from a coupling point of the pipe c and the pipe d from the viewpoint of precipitation properties of the organolithium compound. The point at which the cross-sectional area is 50% to 99% relative to the maximum cross-sectional area of the pipe is more preferably within 100 cm from the coupling point of the pipe c and the pipe d, further preferably within 50 cm from the coupling point of the pipe c and the pipe d. The rate of reduction of the cross-sectional area of the pipe within 100 cm from the coupling point of the pipe c and the pipe d is more preferably 50 to 99%, further preferably 70 to 97%.

The pipe in which the cross-sectional area is reduced is preferably the pipe c from the viewpoint of ease of formation of turbulent flow. Furthermore, the pipe c more preferably has at least one point, at which the cross-sectional area is 50% to 99% relative to the maximum cross-sectional area of the pipe within 100 cm from the coupling point of the pipe c and the pipe d, within 100 cm from the coupling point of the pipe c and the pipe d.

Examples

The present invention is described in more detail with reference to the following Examples. It is to be noted that the present invention is not limited to the following Examples.

(Example 1)

A copolymer of 1,3-butadiene and styrene was produced as follows.

As the polymerization tank, a polymerization tank (inner volume: 10m$^3$) equipped with a stirring blade with four paddles was used.

As the production apparatus, used was an apparatus having the polymerization tank, a pipe a for feeding a monomer containing a conjugated diene compound and/or an aromatic vinyl compound to the polymerization tank, a pipe b for feeding an organolithium compound solution II, in which an organolithium compound solution I and a non-polar solvent were mixed, to the polymerization tank, a pipe c for feeding the non-polar solvent to the pipe b, and a pipe d for feeding the organolithium compound solution I to the pipe b. Furthermore, the pipes b, c and d were each a Venturi tube having a structure that formed turbulent flow as illustrated in Figure 1.

1,3-Butadiene from which impurities such as moisture were removed, styrene and n-hexane were mixed under conditions of 22 kg/min, 7.1 kg/min and 129 kg/min, respectively, and the resulting mixture was further mixed with n-butyllithium (84 mmol/min) by a static mixer immediately before being fed to the polymerization tank, providing a monomer mixture in which a deactivation agent of the polymerization initiator contained in the monomer was treated. The resulting monomer mixture was continuously fed from the bottom of the polymerization tank to the polymerization tank, and 2,2-bis(2-oxolanyl)propane was continuously fed from the bottom of the polymerization tank to the polymerization tank at a flow rate of 40 g/min.

A Venturi tube illustrated in Figure 1, separately from the above, was used, and n-butyllithium was subjected to dilution and fed to the polymerization tank, as described below. n-Hexane (2) was fed through a pipe (1) at a flow rate of 165 kg/min. n-Hexane (2) was in the state of laminar flow in flowing in the pipe (1), but was changed to be in the state of turbulent flow due to an increase in flow rate in passing through a throttle part (5) of the pipe where the cross-sectional area was minimum. This point of the throttle part (5) passed through a pipe (3), and a 20% by mass n-butyllithium solution in cyclohexane (4) was fed at a flow rate of 112 g/min. A n-butyllithium solution diluted to a concentration of 0.02% by mass (4') passed through a polymerization initiator feed pipe (6), and was fed from a polymerization initiator feed port (7) to the bottom of the polymerization tank. Here, the inner diameter of each of the pipes (1) and (6) was 27.6 mm, the inner diameter of the pipe (3) was 16.1 mm, the inner diameter of the throttle part (5) was 5 mm, and the Reynolds number (Re) of the n-hexane fluid at the coupling point (5) was as follow: Re = 2,184 $\times$ 10$^3$. The point at which the area was 50% to 99% relative to the cross-sectional area of the pipe (1) was located within 100 cm from the coupling point (5), and the ratio (X/D) of the distance X cm to the diameter of the pipe, D mm, was as follows: X/D < 5. Copolymerization of 1,3-butadiene and styrene progressed in the polymerization tank, and a living polymer solution at a temperature of 90°C was discharged through the outlet pipe at the top portion of the polymerization tank. After the polymerization reaction was continued for 120 hours, feeding of the starting materials was stopped, the solution in the polymerization tank was entirely drained, and the inner wall of the polymerization tank was observed and gel adhesion was not observed.

(Example 2)

The polymerization reaction was performed in the same manner as in Example 1 except that the flow rate of n-hexane (2) in the pipe (1) was changed to 110 kg/min and the flow rate of the 20% by mass n-butyllithium solution in cyclohexane (4) to be fed through the pipe (3) was changed to 336 g/min. n-Hexane (2) was in the state of laminar flow in flowing in the pipe (1), but was changed to be in the state of turbulent flow due to an increase in flow rate in passing through the throttle part (5) of the pipe where the cross-sectional area was minimum. The Reynolds number (Re) of the n-hexane fluid at the coupling point (5) was as follow: Re = 1,460 $\times$ 10$^3$. The point at which the area was 50% to 99% relative to the cross-sectional area of the pipe (1) was located within 100 cm from the coupling point (5), and the ratio (X/D) of the distance X cm to the diameter of the pipe, D mm, was as follows: X/D < 5. After the polymerization reaction was continued for 120 hours, feeding of the starting materials was stopped, the solution in the polymerization tank was entirely drained, and the inner wall of the polymerization tank was observed and gel adhesion was not observed.

(Example 3)

The same manner as in Example 1 was performed except that the monomer to be fed to the polymerization tank was styrene (30.0 kg/min) instead of the mixture of 1,3 butadiene and styrene. n-Hexane (2) was in the state of laminar flow in flowing in the pipe (1), but was changed to be in the state of turbulent flow due to an increase in flow rate in passing through the throttle part (5) of the pipe where the cross-sectional area was minimum. The Reynolds number (Re) of the n-hexane fluid at the coupling point (5) was as follow: $Re = 2,184 \times 10^3$. The point at which the area was 50% to 99% relative to the cross-sectional area of the pipe (1) was located within 100 cm from the coupling point (5), and the ratio (X/D) of the distance X cm to the diameter of the pipe, D mm, was as follows: X/D < 5. After the polymerization reaction was continued for 120 hours, feeding of the starting materials was stopped, the solution in the polymerization tank was entirely drained, and the inner wall of the polymerization tank was observed and gel adhesion was not observed.

(Comparative Example 1)

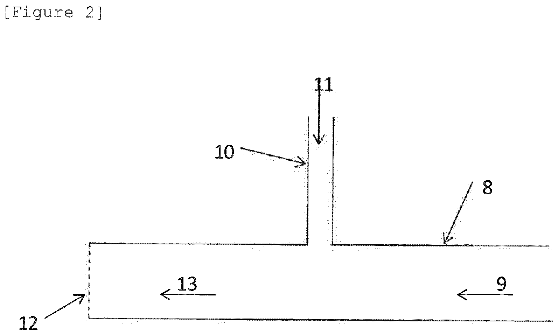

The polymerization reaction was performed in the same manner as in Example 1 except that a pipe without the throttle part illustrated in Figure 2 was used instead of the Venturi tube. A specific feeding method in the pipe illustrated in Figure 2 was as follows. First, n-hexane (9) was fed at a rate of 165 kg/min through a pipe (8). In addition, a 20% by mass n-butyllithium solution in cyclohexane (11) was fed at a rate of 112 g/min through a pipe (10). A n-butyllithium solution diluted to a concentration of 0.02% by mass (13) was fed from a polymerization initiator feed port (12) to the bottom of a polymerization tank. The flow of n-hexane (9) in the pipe (8), the flow at the point where the n-butyllithium solution in cyclohexane (11) was combined with n-hexane (9), and the flow of the n-butyllithium solution (13) after such combining were each laminar flow. The Reynolds number (Re) here was as follows: $Re = 397 \times 10^3$. After the polymerization reaction was continued for 120 hours, feeding of the starting materials was stopped, the solution in the polymerization tank was entirely drained, and the inner wall of the polymerization tank was observed and gel adhesion was observed.

(Comparative Example 2)

The polymerization reaction was performed under the same conditions as in Example 1 except that a pipe without the throttle part illustrated in Figure 2 was used, the inner diameter of the pipe (8) was 80.7 mm, the flow rate of n-hexane in the pipe (8) was 30 kg/min, and the flow rate of 1,3-butadiene to be fed to the polymerization tank and the flow rate of n-hexane to be mixed with styrene were each 265 kg/min. The Reynolds number (Re) at the point where combining with the pipe (10) was made was as follows: Re = 24,700, and laminar flow was formed. After the polymerization reaction was continued for 120 hours, feeding of the starting materials was stopped, the solution in the polymerization tank was entirely drained, and the inner wall of the polymerization tank was observed and gel adhesion was observed.

(Example 4)

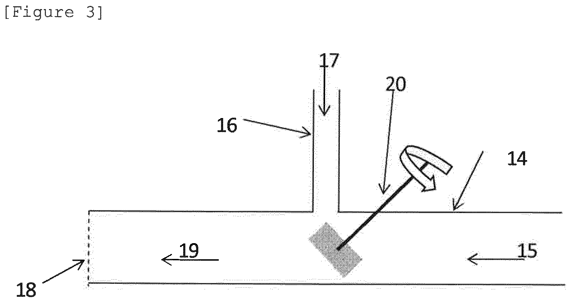

The polymerization reaction was performed under the same apparatus and conditions as in Example 1 except that a pipe without the throttle part illustrated in Figure 3 was used, a stirring blade having four paddle blades was provided as an inline mixer at a point where a pipe (15) having an inner diameter of 155.2 mm and a pipe (17) having an inner diameter of 16.1 mm were combined, n-hexane was allowed to flow in the pipe (15) at a flow rate of 4 kg/min, a 20% by mass n-butyllithium solution in cyclohexane was allowed to flow in the pipe (17) at a flow rate of 112 g/min, the stirring blade at the point where the pipes (15) and (17) were combined was rotated at 300 rpm, a mixed liquid obtained by formation of turbulent flow of the liquid at the combining point was fed from the bottom of the polymerization tank, and a monomer mixture which was prepared in the same manner as in Example 1 except that the flow rate of n-hexane to be mixed with the monomer was 290 kg/min was used. After the polymerization reaction was continued for 120 hours, feeding of the starting materials was stopped, the solution in the polymerization tank was entirely drained, and the inner wall of the polymerization tank was observed and gel adhesion was not observed.

(Example 5)

The polymerization reaction was performed in the same manner as in Example 4 except that a static mixer was provided at the point, where the pipes (15) and (17) were combined, to provide the liquid at the combining point in the form of turbulent flow. After the polymerization reaction was continued for 120 hours, feeding of the starting materials was stopped, the solution in the polymerization tank was entirely drained, and the inner wall of the polymerization tank was observed and gel adhesion was not observed.

(Comparative Example 3)

The polymerization reaction was performed in the same manner as in Example 4 except that no stirring blade was provided. The Reynolds number (Re) at the point where the pipes (15) and (17) were combined was as follows: Re = 1,710, and laminar flow was formed. After the polymerization reaction was continued for 120 hours, feeding of the starting materials was stopped, the solution in the polymerization tank was entirely drained, and the inner wall of the polymerization tank was observed and gel adhesion was observed.

The present application is based on Japanese Patent Application (Japanese Patent Application No. 2013-148936) filed on July 17, 2013 and Japanese Patent Application (Japanese Patent Application No. 2013-222605) filed on October 25, 2013, the contents of which are herein incorporated by reference.

Industrial Applicability

The production method of the present invention enables gel adhesion in the polymerization tank (particularly, gel adhesion around of the initiator feed port) to be suppressed, resulting in producing a polymer without any gel incorporated.

Reference Signs List

1: pipe through which non-polar solvent passes, 2: non-polar solvent, 3: pipe through which organolithium compound solution I passes, 4: organolithium compound solution I, 4': organolithium compound solution II, 5: throttle part of the pipe where cross-sectional area is minimum, 6: polymerization initiator feed pipe, 7: polymerization initiator feed port, 8: pipe through which n-hexane passes, 9: n-hexane, 10: pipe through which 20% by mass n-butyllithium solution in cyclohexane passes, 11: 20% by mass n-butyllithium solution in cyclohexane, 12: polymerization initiator feed port, 13: n-butyllithium solution diluted to 0.02% by mass, 14: pipe through which n-hexane passes, 15: n-hexane, 16: pipe through which 20% by mass n-butyllithium solution in cyclohexane passes, 17: 20% by mass n-butyllithium solution in cyclohexane, 18: polymerization initiator feed port, 19: n-butyllithium solution diluted, 20: inline mixer

**Claims**

1. A method for producing a polymer by polymerization of a monomer comprising a conjugated diene compound and/or an aromatic vinyl compound by use of an organolithium compound as a polymerization initiator, comprising
step (1) of mixing an organolithium compound solution I in which the concentration of the organolithium compound is 5 to 50% by mass and a non-polar solvent in a pipe-system to provide an organolithium compound solution II, and
step (2) of feeding the organolithium compound solution II to the bottom of a polymerization tank,

wherein at least one selected from the group consisting of the organolithium compound solution I, the organolithium compound solution II and the non-polar solvent is in the state of turbulent flow in step (1), said turbulent flow being **characterized by** a Reynolds number (Re) of 500000 or more.

2. The method for producing the polymer according to claim 1, wherein
the pipe-system has a pipe (i) through which the organolithium compound solution I passes, a pipe (ii) through which the non-polar solvent passes, and a pipe (iii) through which the organolithium compound solution II passes,
the pipe (i) and the pipe (ii) are coupled in a coupling point (Z) to thereby combine the organolithium compound solution I and the non-polar solvent, and
one or more pipes selected from the group consisting of the pipes (i), (ii) and (iii) have at least one point, at which a cross-sectional area is 50% to 99% relative to a maximum cross-sectional area of the pipe within 100 cm from the coupling point (Z) of the pipe (i) and the pipe (ii) .

3. The method for producing the polymer according to claim 2, wherein the pipe (ii) has at least one point, at which a cross-sectional area is 50% to 99% relative to a maximum cross-sectional area of the pipe within 100 cm from the coupling point (Z).

4. The method for producing the polymer according to any one of claims 1 to 3, wherein step (1) is performed in a Venturi tube.

5. The method for producing the polymer according to any one of claims 1 to 3, wherein step (1) is performed by a static mixer or by stirring in a pipe by a stirring blade.

6. The method for producing the polymer according to any one of claims 1 to 5, wherein the polymerization tank is a continuous type tank.

**Patentansprüche**

1. Verfahren zur Herstellung eines Polymers durch Polymerisation eines Monomers, das eine konjugierte Dienverbindung und/oder eine aromatische Vinylverbindung enthält, unter Verwendung einer Organolithiumverbindung als Polymerisationsinitiator, umfassend:

Schritt (1) des Mischens einer Organolithiumverbindungslösung I, in welcher die Konzentration der Organolithiumverbindung 5 bis 50 Massen-% ist, und eines nichtpolaren Lösungsmittels in einem Rohrsystem, um eine Organolithiumverbindungslösung II zu erhalten, und Schritt (2) des Zuführens der Organolithiumverbindungslösung II zum unteren Teil eines Polymerisationsbehälters,

wobei sich in dem Schritt (1) mindestens eines aus der Gruppe bestehend aus der Organolithiumverbindungslösung I, der Organolithiumverbindungslösung II und dem nichtpolaren Lösungsmittel im Zustand einer turbulenten Strömung befindet, wobei die turbulente Strömung durch eine Reynolds-Zahl (Re) von 500000 oder mehr gekennzeichnet ist.

2. Verfahren zur Herstellung eines Polymers nach Anspruch 1, wobei

das Rohrsystem ein Rohr (i), durch welches die Organolithiumverbindungslösung I verläuft, ein Rohr (ii), durch welches das unpolare Lösungsmittel verläuft, und ein Rohr (iii), durch welches die Organolithiumverbindungslösung II verläuft, aufweist,

das Rohr (i) und das Rohr (ii) in einer Verbindungsstelle (Z) verbunden sind, um dadurch die Organolithiumverbindungslösung I und das unpolare Lösungsmittel zu verbinden, und

ein oder mehrere Rohre, die aus der Gruppe der Rohre (i), (ii) und (iii) ausgewählt sind, mindestens eine Stelle aufweisen, an der eine Querschnittsfläche 50 % bis 99 % in Bezug auf eine maximale Querschnittsfläche des Rohrs beträgt, innerhalb von 100 cm ab der Verbindungsstelle (Z) von Rohr (i) und Rohr (ii).

3. Verfahren zur Herstellung des Polymers nach Anspruch 2, wobei das Rohr (ii) mindestens eine Stelle aufweist, an der eine Querschnittsfläche von 50 % bis 99 % in Bezug zu der maximalen Querschnittsfläche des Rohrs beträgt, innerhalb von 100 cm von der Verbindungsstelle (Z).

4. Verfahren zur Herstellung des Polymers nach einem der Ansprüche 1 bis 3, wobei Schritt (1) in einem Venturi-Rohr durchgeführt wird.

5. Verfahren zur Herstellung des Polymers nach einem der Ansprüche 1 bis 3, wobei Schritt (1) durch einen statischen Mischer oder durch Rühren in einem Rohr mit einem Rührblatt durchgeführt wird.

6. Verfahren zur Herstellung des Polymers nach einem der Ansprüche 1 bis 5, wobei der Polymerisationsbehälter ein Behälter vom kontinuierlichen Typ ist.

**Revendications**

1. Procédé de production d'un polymère par polymérisation d'un monomère comprenant un composé diénique conjugué et/ou un composé vinylique aromatique à l'aide d'un composé organique du lithium en tant qu'initiateur de polymérisation, comprenant l'étape (1) de mélange d'une solution de composé organique du lithium I dans laquelle la concentration du composé organique du lithium est de 5 à 50 % en masse et d'un solvant non polaire dans un système de tuyauterie pour fournir une solution de composé organique du lithium II, et

l'étape (2) d'introduction de la solution de composé organique du lithium II au fond d'une cuve de polymérisation,

dans lequel au moins un choisi dans le groupe constitué de la solution de composé organique du lithium I, de la solution de composé organique du lithium II et du solvant non polaire est dans l'état d'écoulement turbulent dans l'étape (1), ledit écoulement turbulent étant **caractérisé par** un nombre de Reynolds (Re) de 500 000 ou plus.

2. Procédé de production du polymère selon la revendication 1, dans lequel

le système de tuyauterie comporte un tuyau (i) à travers lequel la solution de composé organique du lithium I passe, un tuyau (ii) à travers lequel le solvant non polaire passe, et un tuyau (iii) à travers lequel la solution de composé organique du lithium II passe,

le tuyau (i) et le tuyau (ii) sont couplés en un point de couplage (Z) pour ainsi combiner la solution de composé organique du lithium I et le solvant non polaire, et

un ou plusieurs tuyaux choisis dans le groupe constitué des tuyaux (i), (ii) et (iii) ont au moins un point, au niveau duquel une superficie en coupe transversale est de 50 % à 99 % par rapport à une superficie maximale en coupe transversale du tuyau dans les 100 cm à partir du point de couplage (Z) du tuyau (i) et du tuyau (ii).

3. Procédé de production du polymère selon la revendication 2, dans lequel le tuyau (ii) a au moins un point, au niveau duquel une superficie en coupe transversale est de 50 % à 99 % par rapport à une superficie maximale en coupe transversale du tuyau dans les 100 cm à partir du point de couplage (Z).

4. Procédé de production du polymère selon l'une quelconque des revendications 1 à 3, dans lequel l'étape (1) est réalisée dans un tube de Venturi.

5. Procédé de production du polymère selon l'une quelconque des revendications 1 à 3, dans lequel l'étape (1) est réalisée par un mélangeur statique ou par agitation dans un tuyau par une pale d'agitation.

6. Procédé de production du polymère selon l'une quelconque des revendications 1 à 5, dans lequel la cuve de polymérisation est une cuve de type continu.

[Figure 1]

[Figure 2]

[Figure 3]

**EP 3 023 440 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59176311 A
- WO 2012531515 A
- EP 0648790 A1
- GB 1255764 A
- JP 2009067999 A
- JP H0314803 A
- US 2008275195 A1
- US 3297793 A
- US 5708092 A
- GB 2241239 A
- US 5527753 A
- JP 59140211 A
- JP 2013148936 A
- JP 2013222605 A